(19) Europäisches Patentamt
European Patent Office
Office européen des brevets

(11) EP 4 708 432 A1

(12) **EUROPEAN PATENT APPLICATION**
published in accordance with Art. 153(4) EPC

(43) Date of publication:
**11.03.2026 Bulletin 2026/11**

(21) Application number: **24815809.9**

(22) Date of filing: **25.05.2024**

(51) International Patent Classification (IPC):
**H01M 10/056** (2010.01)    **H01M 10/052** (2010.01)

(52) Cooperative Patent Classification (CPC):
Y02E 60/10

(86) International application number:
**PCT/KR2024/007117**

(87) International publication number:
**WO 2024/248433 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.05.2023  KR 20230068605**
           **24.05.2024  KR 20240067588**

(71) Applicant: **SK On Co., Ltd.**
**Seoul 03161 (KR)**

(72) Inventors:
• **LEE, Seunghwan**
  **Daejeon 34124 (KR)**
• **PARK, Myungsoo**
  **Daejeon 34124 (KR)**
• **LEE, Hansol**
  **Daejeon 34124 (KR)**
• **GO, Hyeonjin**
  **Daejeon 34124 (KR)**
• **RYU, Hyemin**
  **Daejeon 34124 (KR)**
• **PARK, Chanhwi**
  **Daejeon 34124 (KR)**

(74) Representative: **Prüfer & Partner mbB**
**Patentanwälte · Rechtsanwälte**
**Sohnckestraße 12**
**81479 München (DE)**

(54) **POROUS ORGANIC-INORGANIC COMPOSITE ELECTROLYTE MEMBRANE, MANUFACTURING METHOD THEREFOR, AND LITHIUM SECONDARY BATTERY COMPRISING SAME**

(57)    The present disclosure relates to a porous organic-inorganic composite electrolyte membrane, an organic-inorganic composite electrolyte comprising the porous organic-inorganic composite electrolyte membrane, a secondary battery comprising the porous organic-inorganic composite electrolyte membrane, and a method for manufacturing the porous organic-inorganic composite electrolyte membrane, the porous organic-inorganic composite electrolyte membrane comprising an oxide-based inorganic electrolyte and a fluorine-based polymer matrix, wherein the oxide-based inorganic electrolyte is contained in the fluorine-based polymer matrix, and, in the X-ray photoelectron spectroscopy (XPS) analysis result of the surface, the ratio $(S_{CO3}/S_{Zr})$ of the area $(S_{CO3})$ of a peak corresponding to CO3 in the C1s spectrum to the area $(S_{Zr})$ of a peak corresponding to $Zr3d_{5/2}$ in the Zr3d spectrum is greater than 0 and less than or equal to 5.0.

[FIG. 8]

**Description**

[Technical Field]

The present disclosure relates to a porous organic-inorganic composite electrolyte membrane, a method for manufacturing the same, and a lithium secondary battery including the same.

[Background Art]

Recently, as the demand for eco-friendly energy increases, research on electrochemical devices is in progress in various fields including electronic devices, such as mobile phones and PCs, and electric vehicles. A lithium secondary battery, which is a general purpose electrochemical device, is generally composed of a lithium transition metal oxide positive electrode, a graphite-based negative electrode, an organic electrolytic solution, and the like, and a next-generation lithium secondary battery having high performance is being developed by developing/applying various types of new materials for the purpose of improving external effects such as high temperature/low temperature properties, safety, durability, and performance reliability, as well as electrochemical performance such as high capacity, high output, and long lifespan.

Specifically, in order to solve the problem of a lack of safety due to flammability, corrosiveness, thermal instability, vulnerability to high voltage, and the like of an organic electrolytic solution, attempts are being made to apply a solid electrolyte. Among them, an oxide-based inorganic solid electrolyte such as garnet type LLZO ($Li_7La_3Zr_2O_{12}$) has high ion conductivity, excellent thermal and chemical stability, and excellent mechanical strength and shows an effect of suppressing lithium dendrites, but its manufacturing process is difficult, and its surface properties are insufficient.

In order to solve the problems, research on an organic-inorganic composite electrolyte is in progress, but ion conductivity or contact performance with Li of LLZO is reduced due to a side reaction on the surface of LLZO, and its surface properties are still insufficient.

Therefore, research and development of a solid electrolyte having excellent surface properties while having high ion conductivity, excellent thermal and chemical stability, and excellent mechanical strength are urgently demanded.

**[Disclosure]**

[Technical Problem]

An object of the present disclosure is to provide a porous organic-inorganic composite electrolyte membrane having excellent ion conductivity and surface properties by effectively suppressing a side reaction on the surface of an oxide-based inorganic electrolyte, and a method for manufacturing the same.

Another object of the present disclosure is to provide a composite electrolyte including the porous organic-inorganic composite electrolyte membrane and an organic electrolyte.

Still another object of the present disclosure is to provide a lithium secondary battery having battery performance of excellent life characteristics and high-rate characteristics, including the composite electrolyte.

[Technical Solution]

In one general aspect, a porous organic-inorganic composite electrolyte membrane includes: an oxide-based inorganic electrolyte and a fluorine-based polymer matrix, wherein the oxide-based inorganic electrolyte is included in the fluorine-based polymer matrix, and as a result of X-ray photoelectron spectroscopy (XPS) of the surface, a ratio ($S_{CO_3}/S_{Zr}$) of an area ($S_{CO_3}$) of a peak corresponding to $CO_3$ in a C1s spectrum to an area ($S_{Zr}$) of a peak corresponding to $Zr3d_{5/2}$ in a Zr3d spectrum is more than 0 and 5.0 or less.

According to an exemplary embodiment, as a result of X-ray diffraction (XRD) analysis, the oxide-based inorganic electrolyte may show a first peak in a $2\theta$ range of $16.5 \pm 1.0$.

According to an exemplary embodiment, a lattice parameter of a unit lattice of the oxide-based inorganic electrolyte calculated by the Rietveld refinement method based on an X-ray diffraction (XRD) spectrum may be 12.90 Å < a=b=c < 13.05 Å.

According to an exemplary embodiment, the oxide-based inorganic electrolyte may have a volume (V) of the unit lattice volume of 2147.0 to 2216.5 Å$^3$.

According to an exemplary embodiment, the oxide-based inorganic electrolyte may be any one or a combination of two or more selected from the group consisting of garnet-type oxides (LLZO), NASICON-type oxides, perovskite-type oxides, and the like.

According to an exemplary embodiment, the fluorine-based polymer may have a Hansen solubility parameter ($\delta$)

of 20 to 30 MPa$^{0.5}$.

According to an exemplary embodiment, the porous organic-inorganic composite electrolyte membrane may have a porosity of 30% or more.

In another general aspect, an organic-inorganic composite electrolyte includes: the porous organic-inorganic composite electrolyte membrane described above and an organic electrolyte.

According to an exemplary embodiment, the organic-inorganic composite electrolyte may have an ion conductivity of $1 \times 10^{-4}$ S/cm or more.

In another general aspect, a lithium secondary battery includes: the organic-inorganic composite electrolyte.

In another general aspect, a method for manufacturing an organic-inorganic composite electrolyte membrane includes: (S1) preparing an organic-inorganic electrolyte slurry including a fluorine-based polymer, an oxide-based inorganic electrolyte, a first solvent, and a second solvent; and

(S2) drying the electrolyte slurry to manufacture a porous organic-inorganic composite electrolyte membrane, wherein the first solvent and the second solvent do not cause phase separation, and the second solvent and the fluorine-based polymer cause phase separation from each other.

According to an exemplary embodiment, the first solvent may be a polar organic solvent, and the second solvent may be a nonpolar organic solvent.

According to an exemplary embodiment, the Hansen solubility parameter ($\delta_{s1}$) of the first solvent and the Hansen solubility parameter ($\delta_m$) of the fluorine-based polymer may satisfy the following Equation 1:

$$[\text{Equation 1}] \quad \delta_m - \delta_{s1} < 10 \text{ MPa}^{0.5}.$$

According to an exemplary embodiment, the Hansen solubility parameter ($\delta_{s1}$) of the first solvent may be 17 to 24 MPa$^{0.5}$.

According to an exemplary embodiment, the Hansen solubility parameter ($\delta_{s2}$) of the second solvent and the Hansen solubility parameter ($\delta_m$) of the fluorine-based polymer may satisfy the following Equation 2:

$$[\text{Equation 2}] \quad 7 \text{ MPa}^{0.5} \leq \delta_m - \delta_{s2}.$$

According to an exemplary embodiment, the Hansen solubility parameter ($\delta_{s2}$) of the second solvent may be 17 MPa$^{0.5}$ or less.

According to an exemplary embodiment, the first solvent and the second solvent may satisfy a weight ratio of 5 to 50:1.

According to an exemplary embodiment, (S2) may include: (a) applying the electrolyte slurry; (b) drying the first solvent of the electrolyte slurry at a first drying temperature; and (b) drying the second solvent of the electrolyte slurry at a second drying temperature.

According to an exemplary embodiment, the second drying temperature may be higher than the first drying temperature.

In still another general aspect, a method for manufacturing an organic-inorganic composite electrolyte includes: manufacturing the porous organic-inorganic composite electrolyte membrane; and impregnating the porous organic-inorganic composite electrolyte membrane with an organic electrolyte.

[Advantageous Effects]

The porous organic-inorganic composite electrolyte membrane according to an exemplary embodiment of the present disclosure may show excellent surface properties while having high ion conductivity, excellent thermal and chemical stability, and excellent mechanical strength. In addition, a lithium secondary battery including the porous organic-inorganic composite electrolyte membrane may implement an effect of remarkable improvement of chemical and mechanical stability and show battery performance of excellent life characteristics and high-rate characteristics, as compared with the case of using an organic electrolytic solution alone.

[Description of Drawings]

FIG. 1 is an image in which changes after the organic-inorganic composite electrolyte slurries of Example 1 and Comparative Example 1 were prepared and then allowed to stand at room temperature for 1 hour were observed.

FIG. 2 is an SEM analysis image of the surface of the porous organic-inorganic composite electrolyte membrane according to Example 1. Specifically, (a) of FIG. 2 is an SEM image measured at a low magnification, and (b) is an SEM image measured at a high magnification.

FIG. 3 is (a) an SEM analysis image, (b) porosity analysis results using an Image J program, and EDX mapping (b) La element and (d) F element images, of the cross section of the porous organic-inorganic composite electrolyte membrane according to Example 1, and (e) an SEM analysis image, (f) porosity analysis results using an Image J program, and EDX mapping (g) La element and (h) F element image, of the cross section of the porous organic-inorganic composite electrolyte membrane according to Example 2.

FIG. 4 is an X-ray photoelectron spectroscopy (XPS) spectrum of the surface of the porous organic-inorganic composite electrolyte membrane according to Example 1. Specifically, (a) is a C1s spectrum, and (b) is a Zr3d spectrum.

FIG. 5 is an X-ray photoelectron spectroscopy (XPS) spectrum of the surface of the electrolyte membrane according to Comparative Example 1. Specifically, (a) is a C1s spectrum, and (b) is a Zr3d spectrum.

FIG. 6 is the X-ray photoelectron spectroscopy (XPS) spectrum of the surface of the electrolyte membrane according to Comparative Example 2. Specifically, (a) is a C1s spectrum, and (b) is a Zr3d spectrum.

FIG. 7 is an X-ray diffraction (XRD) spectrum of the porous organic-inorganic composite electrolyte membrane according to Example 1.

FIG. 8 is an image of the porous organic-inorganic composite electrolyte membrane according to Example 1, through which membrane shape and flexibility expressed from the excellent surface properties of the porous organic-inorganic composite electrolyte membrane were confirmed.

FIG. 9 is a graph evaluating high-rate characteristics and life characteristics of the organic-inorganic composite electrolytes of Examples 1 to 3 and Comparative Examples 3 and 4.

[Best Mode]

Hereinafter, the present disclosure will be described in more detail by the following exemplary embodiment or examples. However, the following exemplary embodiments or examples are only a reference for describing the present disclosure in detail, and the present disclosure is not limited thereto and may be implemented in various forms.

In addition, unless otherwise defined, all technical terms and scientific terms have the same meanings as those commonly understood by one of those skilled in the art to which the present disclosure pertains. The terms used herein are only for effectively describing a certain specific example and are not intended to limit the present disclosure.

In addition, the singular form used in the specification and claims appended thereto may be intended to include a plural form also, unless otherwise indicated in the context.

In addition, unless particularly described to the contrary, "comprising" any elements will be understood to imply further inclusion of other elements rather than the exclusion of other elements.

In addition, units used in the present specification without particular mention are based on weights, and as an example, a unit of % or ratio refers to a wt% or a weight ratio, and wt% refers to wt% of any one component in a total composition, unless otherwise defined.

In addition, the numerical range used in the present specification includes all values within the range including the lower limit and the upper limit, increments logically derived in a form and span of a defined range, all double limited values, and all possible combinations of the upper limit and the lower limit in the numerical range defined in different forms. Unless otherwise defined in the specification of the present invention, values which may be outside a numerical range due to experimental error or rounding off of a value are also included in the defined numerical range.

In addition, the term "Hansen solubility parameter" of the present specification refers to a Hansen solubility parameter (suggested by Dr. C. Hansen in 1967) which is a bonding degree within a material calculated considering 3 factors of a nonpolar dispersion bond, a polar bond due to permanent dipoles, and a hydrogen bond.

Since, conventionally, a side reaction with a solvent occurs excessively when manufacturing an organic-inorganic composite solid electrolyte using an oxide-based inorganic electrolyte, film formation is difficult due to an increased viscosity of the slurry. In addition, the crystal structure of the inorganic electrolyte changes to a tetragonal phase to cause various problems such as significantly poor surface properties and reduced performance of ion conductivity or contact with Li.

The porous organic-inorganic composite electrolyte membrane according to an exemplary embodiment of the present disclosure includes an oxide-based inorganic electrolyte and a fluorine-based polymer matrix, and the oxide-based inorganic electrolyte may be included in the fluorine-based polymer matrix.

As a result of X-ray photoelectron spectroscopy (XPS) of the surface of the porous organic-inorganic composite electrolyte membrane, a ratio ($S_{CO3}/S_{Zr}$) of an area ($S_{CO3}$) of a peak corresponding to $CO_3$ in a C1s spectrum to an area

($S_{Zr}$) of a peak corresponding to Zr3d$_{5/2}$ in a Zr3d spectrum may be more than 0 and 5.0 or less. Accordingly, an oxide-based inorganic electrolyte of which the crystal structure is a cubic phase may be stably formed to suppress a side reaction and secure excellent ion conductivity.

Hereinafter, each component of the porous organic-inorganic composite electrolyte membrane according to an exemplary embodiment of the present disclosure will be described.

The present disclosure provides a porous organic-inorganic composite electrolyte membrane (hereinafter, referred to as a composite electrolyte membrane) including an oxide-based inorganic electrolyte and a fluorine-based polymer matrix, wherein the oxide-based inorganic electrolyte is included in the fluorine-based polymer matrix, and as a result of X-ray photoelectron spectroscopy (XPS) of the surface of the electrolyte membrane, a ratio ($S_{CO3}/S_{Zr}$) of an area ($S_{CO3}$) of a peak corresponding to $CO_3$ in a C1s spectrum to an area ($S_{Zr}$) of a peak corresponding to Zr3d$_{5/2}$ in a Zr3d spectrum is more than 0 and 5.0 or less.

According to an exemplary embodiment, as a result of X-ray photoelectron spectroscopy (XPS) of the surface of the electrolyte membrane, the ratio ($S_{CO3}/S_{Zr}$) of the area ($S_{CO3}$) of a peak corresponding to $CO_3$ in a C1s spectrum to the area ($S_{Zr}$) of a peak corresponding to Zr3d$_{5/2}$ in a Zr3d spectrum may be more than 0 and 5.0 or less, more than 0 and 4 or less, more than 0 and 3 or less, more than 0 and 2.5 or less, more than 0 and 2 or less, more than 0 and 1.7 or less, more than 0 and 1.5 or less, more than 0 and 1 or less, or more than 0 and 0.5 or less. Otherwise, it may be also 0.1 to 5, 0.1 to 4.6, 0.1 to 4, 0.1 to 3, 0.1 to 2.5, 0.1 to 2, 0.1 to 1.7, 0.1 to 1.5, 0.1 to 1, 0.1 to 0.5, 0.5 to 5, 0.5 to 4.0, 0.5 to 3, 0.5 to 2.5, 1.0 to 2.5, or 1.0 to 2. The electrolyte membrane according to an exemplary embodiment may implement an electrolyte membrane which effectively suppresses a side reaction and has ion conductivity of excellent surface properties, by satisfying the above range of the ratio ($S_{CO3}/S_{Zr}$). Without being bound to a specific theory, the peak corresponding to $CO_3$ may be related to a production amount of $Li_2CO_3$ on the surface of the oxide-based inorganic electrolyte of the electrolyte membrane according to an exemplary embodiment.

According to an exemplary embodiment, the fluorine-based polymer matrix may be a porous matrix including a fluorine-based polymer. The fluorine-based polymer and the oxide-based inorganic electrolyte will be described in detail later.

According to an exemplary embodiment, as a result of X-ray diffraction (XRD) analysis, the oxide-based inorganic electrolyte may show a first peak in a 2θ range of 16.5±1.0. In addition, as a result of XRD, the oxide-based inorganic electrolyte may show a second peak in a 2θ range of 30.5±1.0 and a third peak in a 2θ range of 33.5±1.0.

According to an exemplary embodiment, the lattice parameter of the unit lattice of the oxide-based inorganic electrolyte calculated by the Rietveld refinement method based on the X-ray diffraction (XRD) spectrum may be 12.90 Å < a=b=c < 13.05 Å, 12.95 Å < a=b=c < 13.05 Å, or 12.97 Å < a=b=c < 13.04 Å.

According to an exemplary embodiment, the volume (V) of the unit lattice of the oxide-based inorganic electrolyte may be 2146.69 to 2217.34 Å$^3$, 2147.0 to 2216.5 Å$^3$, 2165.0 to 2216.5 Å$^3$, or 2180.0 to 2190.0 Å$^3$.

A side reaction of the oxide-based inorganic electrolyte of the porous organic-inorganic composite electrolyte membrane according to an exemplary embodiment with a solvent may be effectively suppressed to stably form a cubic phase crystal structure having better ion conductivity than a tetragonal phase.

According to an exemplary embodiment, the porous organic-inorganic composite electrolyte membrane may have a thickness of 5 μm to 100 μm, 10 μm to 80 μm, or 15 μm to 50 μm, but is not limited thereto.

According to an exemplary embodiment, the porous organic-inorganic composite electrolyte membrane may have an average pore size of 10 nm to 100 μm or 20 nm to 50 μm, but is not limited thereto.

According to an exemplary embodiment, the porous organic-inorganic composite electrolyte membrane may have a porosity of 10 to 90%, 20 to 80%, 30% or more, 35% or more, 40% or more, 40 to 60%, 60% or less, or 40 to 50%.

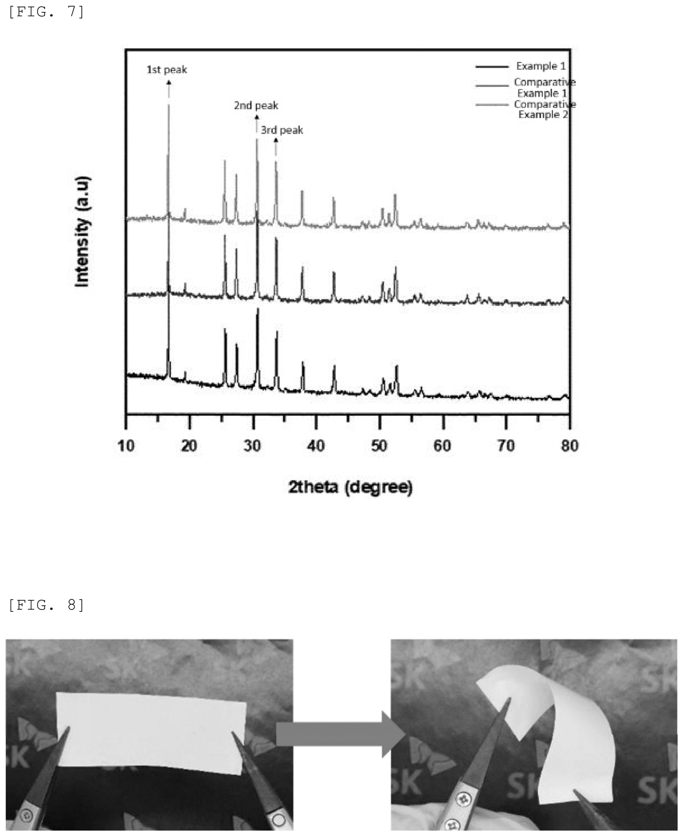

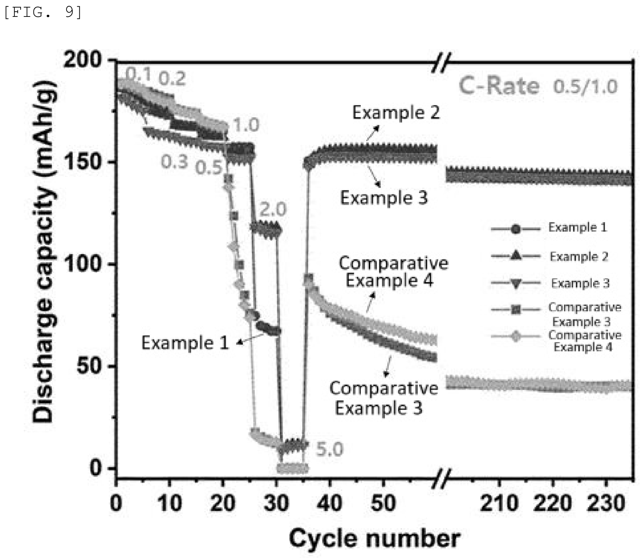

According to an exemplary embodiment, the porous organic-inorganic composite electrolyte membrane may have excellent surface properties as compared with those using conventional technology. Herein, the surface properties may be confirmed from the appearance of the electrolyte membrane or the high-rate characteristics of a battery manufactured using the porous organic-inorganic composite electrolyte membrane. In the case in which the side reaction excessively occurs on the surface of the oxide-based inorganic electrolyte, it is not flexible and also may not be manufactured into a membrane form, and since lithium ion movement is limited, unstable and insufficient charge/-discharge characteristics are shown when the battery is operated at a high rate. However, as shown in FIG. 8, the side reaction on the surface of the porous organic-inorganic composite electrolyte membrane according to an exemplary embodiment is effectively suppressed and the electrolyte membrane may have a flexible appearance. In addition, as shown in FIG. 9, since a lithium secondary battery manufactured using the porous organic-inorganic composite electrolyte membrane according to an exemplary embodiment allows lithium ion movement through the surface of the oxide-based inorganic electrolyte, excellent high-rate characteristics may be implemented.

The present disclosure may provide an organic-inorganic composite electrolyte including the porous organic-inorganic composite electrolyte membrane described above and an organic electrolyte. The organic-inorganic composite electrolyte may be the porous organic-inorganic composite electrolyte membrane impregnated with the organic electrolyte, and may be provided mainly in the form of the organic-inorganic composite electrolyte in the lithium secondary battery described later.

According to an exemplary embodiment, the organic electrolyte may be any one or two or more selected from the group consisting of liquid electrolytes, gel polymer electrolytes, solid polymer electrolytes, and the like, and unless the physical properties to be desired in the present disclosure are impaired, commonly used or known organic electrolytes may be used without great limitation. However, the organic electrolyte may not include the fluorine-based organic electrolyte.

According to an exemplary embodiment, the organic electrolyte may include carbonate-based, ester-based, ether-based, ketone-based, alcohol-based, or aprotic solvents, the solvent may be used alone or in combination of two or more, and a mixing ratio in the case of using a mixture of two or more may be appropriately adjusted depending on the battery performance to be desired. As an example, two or more selected form the group consisting of ethylene carbonate (EC), propylene carbonate (PC), diethyl carbonate (DEC), dimethyl carbonate (DMC), ethyl methyl carbonate (EMC), dipropyl carbonate (DPC), methyl propyl carbonate (MPC), ethyl propyl carbonate (EPC), and butylene carbonate (BC) may be used. In addition, a solvent known in the art may be used, but is not limited thereto.

According to an exemplary embodiment, the organic electrolyte may include a lithium salt. The lithium salt acts as a source of a lithium ion in the battery to allow basic operation of a lithium secondary battery and may promote lithium ion movement between a positive electrode and a negative electrode. A non-limiting example of the lithium salt may include $LiPF_6$, $LiBF_4$, $LiSbF_6$, $LiAsF_6$, $LiN(SO_3C_2F_5)_2$, $LiN(CF_3SO_2)_2$, $LiC_4F_9SO_3$, $LiClO_4$, $LiAlO_2$, $LiAlCl_4$, $LiN(C_xF_{2x+1}SO_2)(C_yF_{2y+1}SO_2)$ (x and y are natural numbers), $LiCl$, $LiI$, $LiB(C_2O_4)_2$, or a combination thereof, but is not limited thereto. The concentration of the lithium salt may be in a range of 0.1 M to 5.0 M, or 0.1 M to 2.0 M.

According to an exemplary embodiment, the organic electrolyte may further include pyridine, triethylphosphate, triethanolamine, cyclic ether, ethylene diamine, n-glyme, hexaphosphate triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxyethanol, aluminum trichloride, and the like, if necessary, for improving charge/discharge characteristics, flame retardant characteristics, and the like. In some cases, a halogen-containing solvent such as carbon tetrachloride and ethylene trifluoride may be further included for imparting non-flammability, and fluoro-ethylene carbonate (FEC), propene sultone (PRS), fluoro-propylene carbonate and FPC), and the like may be further included for improving conservation properties at a high temperature.

According to an exemplary embodiment, the organic-inorganic composite membrane may have a thickness of 5 $\mu$m to 500 $\mu$m, 10 $\mu$m to 300 $\mu$m, or 15 $\mu$m to 200 $\mu$m, but is not limited thereto.

According to an exemplary embodiment, the organic-inorganic composite electrolyte may have an ion conductivity of $1 \times 10^{-6}$ S/cm or more, $1 \times 10^{-4}$ S/cm or more, $3 \times 10^{-4}$ S/cm or more, $5 \times 10^{-4}$ S/cm or more, $7.5 \times 10^{-4}$ S/cm or more, $1 \times 10^{-2}$ S/cm or more, or $5 \times 10^{-4}$ to $1 \times 10^{-2}$ S/cm, but is not limited thereto.

The present disclosure may provide a lithium secondary battery including the organic-inorganic composite membrane described above, and the type of lithium secondary battery is not particularly limited, but as a non-limiting example, a lithium ion battery may be included. Since the lithium secondary battery is well known and its configuration is also known, it will not be described in detail in the present disclosure.

The lithium secondary battery according to an exemplary embodiment may include a separator and the organic-inorganic composite electrolyte described above between a positive electrode and a negative electrode. Herein, the positive electrode and the negative electrode may be used without limitation as long as they are commonly used in the lithium secondary battery.

The lithium secondary battery according to an exemplary embodiment may have excellent life characteristics, and have a capacity retention rate after 200 cycles according to the evaluation method described later of 80% or more, 85% or more, 90% or more, 94% or more, or 99.9% or less, but is not limited thereto.

The lithium secondary battery according to an exemplary embodiment may have excellent high-rate characteristics, and may have a discharge capacity at 2 C according to the evaluation method described later of 50 mAh/g or more, 60 mAh/g or more, 90 mAh/g or more, 100 mAh/g or more, 110 mAh/g or more, or 200 mAh/g or less, but is not limited thereto.

Hereinafter, a method for manufacturing a porous organic-inorganic composite electrolyte membrane according to an exemplary embodiment will be described in more detail.

The present disclosure provides a method for manufacturing a porous organic-inorganic composite electrolyte membrane including: (S1) preparing an organic-inorganic electrolyte slurry including a fluorine-based polymer, an oxide-based inorganic electrolyte, a first solvent, and a second solvent; and (S2) drying the electrolyte slurry to manufacture a porous organic-inorganic composite electrolyte membrane, wherein the first solvent and the second solvent do not cause phase separation, and the second solvent and the fluorine-based polymer cause phase separation from each other. Accordingly, a side reaction between the solvent and the oxide-based inorganic electrolyte may be effectively suppressed to improve storage stability and manufacturing processability of the electrolyte slurry, and the oxide-based inorganic electrolyte having a cubic phase crystal structure may be stably formed to show excellent ion conductivity. Furthermore, a lithium secondary battery having excellent processability, excellent electrochemical performance, and excellent chemical and physical stability may be manufactured using the porous organic-inorganic composite electrolyte membrane.

According to an exemplary embodiment, the fluorine-based polymer may be used without great limitation, as long as it is a polymer including a repeating unit containing one or more fluorine atoms. When the fluorine-based polymer is used, further improved thermal stability, high voltage stability, and mechanical properties may be shown.

A non-limiting example of the fluorine-based polymer may include polyvinylidene fluoride (PVDF), polytetrafluoroethylene (PTFE), a polyvinylidene fluoride-co-hexafluoropropylene copolymer (PVdF-co-HFP), a tetrafluoroethylene-perfluoroalkylvinylether copolymer (PFA), a tetrafluoroethylene-hexafluoropropylene copolymer (FEP), an ethylene-tetrafluoroethylene copolymer (ETFE), a tetrafluoroethylene-chlorotrifluoroethylene copolymer (TFE/CTFE), polychlorotrifluoroethylene (PCTFE), and an ethylene-chlorotrifluoroethylene copolymer (ECTFE), and the like.

According to an exemplary embodiment, the fluorine-based polymer may be a polyvinylidene fluoride-co-hexafluoropropylene copolymer (PVdF-co-HFP), or a polyvinylidene fluoride-co-hexafluoropropylene copolymer (PVdF-co-HFP) including 1 to 50 wt%, 5 to 30 wt%, or 10 to 20 wt% of HFP.

According to an exemplary embodiment, the fluorine-based polymer may have a weight average molecular weight (Mw) of 100,000 to 5,000,000 g/mol, 200,000 to 3,000,000 g/mol, 200,000 to 2,000,000 g/mol, or 300,000 to 1,000,000 g/mol, but is not limited thereto. In addition, the fluorine-based polymer may have a number average molecular weight (Mn) of 50,000 to 3,000,000 g/mol, 50,000 to 1,000,000 g/mol, or 80,000 to 500,000 g/mol, but is not limited thereto.

According to an exemplary embodiment, the fluorine-based polymer may have a Hansen solubility parameter ($\delta$) of 10 to 50 MPa$^{0.5}$, 15 to 40 MPa$^{0.5}$, or 20 to 30 MPa$^{0.5}$.

According to an exemplary embodiment, the oxide-based inorganic electrolyte may be used without great limitation as long as it is commonly used or is a known oxide-based inorganic solid electrolyte, or may be any one or a combination of two or more selected from the group consisting of garnet-type oxides (LLZO), NASICON-type oxides, perovskite-type oxides, and the like. The garnet-type oxide may be represented by $Li_A M1_B La_C M2_D Zr_E M3_F M4_G O_H X_I$ (M1 is a monovalent cation, a divalent cation, a trivalent cation, or a combination thereof, M2 is a monovalent cation, a divalent cation, a trivalent cation, or a combination thereof, M3 is a divalent cation, a trivalent cation, a tetravalent cation, a pentavalent cation, a hexavalent cation, or a combination thereof, M4 is Ir, Ru, Mn, Sn, or a combination thereof, X is a monovalent cation, a divalent cation, a trivalent cation, or a combination thereof, and $6 \leq A \leq 8$, $0 \leq B < 2$, $2.8 \leq C \leq 3$, $0 \leq D \leq 0.2$, $0 < E < 2.0$, $0 < F < 2.0$, $0 < G \leq 0.2$, $9 \leq H \leq 12$, and $0 \leq I \leq 2$), the NASICON-type oxide may be represented by $Na^+_x Zr_2 Si_2 P^{3-}_x O_{12}$ ($0 \leq x \leq 3$), and the perovskite-type oxide may be represented by $Li_a La_b TiO_c$ ($0 < a \leq 1$, $0 < b \leq 1$, $1 \leq c \leq 5$).

According to an exemplary embodiment, the fluorine-based polymer to the oxide-based inorganic electrolyte may satisfy a weight ratio of 10 to 100:10, 10 to 50:10, 15 to 50:10, or 15 to 30:10.

According to an exemplary embodiment, the oxide-based inorganic electrolyte may be included at 10 to 99.9 wt%, 20 to 90 wt%, 30 to 85 wt%, or 50 to 80 wt%, with respect to the total weight of the porous organic-inorganic composite electrolyte membrane.

According to an exemplary embodiment, the Hansen solubility parameter ($\delta_{s1}$) of the first solvent and the Hansen solubility parameter ($\delta_{s2}$) of the second solvent may satisfy $\delta_{s2} < \delta_{s1}$, $\delta_{s2} \leq \delta_m - 9$ MPa$^{0.5} < \delta_{s1}$, or $\delta_{s2} \leq \delta_m - 10$ MPa$^{0.5} < \delta_{s1}$. Herein, $\delta_m$ is the Hansen solubility parameter of the fluorine-based polymer.

According to an exemplary embodiment, the first solvent may be a polar organic solvent, a polar protic organic solvent, a polar aprotic organic solvent, or a mixture thereof. A non-limiting example of the polar organic solvent may include N-methyl-2-pyrrolidone (NMP), acetone, dimethyl sulfoxide (DMSO), cyclohexyl-pyrrolidinone (CHP), N-dodecyl-pyrrolidone ($N_{12}P$), benzyl benzoate), N-octyl-pyrrolidone (N8P), dimethyl-imidazolidinone (DMEU), cyclohexanone, dimethylacetamide (DMA), N-methyl formamide (NMF), bromobenzene, chloroform, chlorobenzene, benzonitrile, quinoline, benzyl ether, ethanol, isopropyl alcohol, methanol, butanol, 2-ethoxyethanol, 2-butoxyethanol, 2-methoxypropanol, tetrahydrofuran (THF), ethylene glycol, pyridine, N-vinylpyrrolidone, methyl ethyl ketone (butanone), $\alpha$-terpinol, formic acid, ethyl acetate, diethyl carbonate (DEC), dimethyl carbonate (DMC), ethyl methyl carbonate (EMC), dipropyl carbonate (DPC), methyl propyl carbonate (MPC), acrylonitrile, and the like, but is not limited thereto.

According to an exemplary embodiment, a dipole moment of the first solvent may be 2 to 10 D, 2 to 8 D, or 3 to 6 D.

According to an exemplary embodiment, the first solvent may be an ether-based organic solvent. The ether-based organic solvent may be an acyclic ether-based organic solvent, a cyclic ether-based organic solvent, or a mixture thereof. A non-limiting example of the ether-based organic solvent may include 1,2-dimethoxyethane, 1,2-diethoxyethane, 1,2-dibuthoxyethane, diethylene glycol dimethyl ether, diethylene glycol diethyl ether, triethylene glycol dimethyl ether, triethylene glycol diethyl ether, tetraethylene glycol dimethyl ether, tetraethylene glycol diethyl ether, 1,3-dioxolane, 4,5-dimethyl-dioxolane, 4,5-diethyl-dioxolane, 4-methyl-1,3-dioxolane, 4-ethyl-1,3-dioxolane, tetrahydrofuran, 2-methyltetrahydrofuran, 2,5-dimethyl tetrahydrofuran, 2,5-dimethoxy tetrahydrofuran, 2-ethoxy tetrahydrofuran, 2-methoxy-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane, 1,2-dimethoxy benzene, 1,3-dimethoxy benzene, 1,4-dimethoxy benzene, isosorbide dimethyl ether, and the like.

According to an exemplary embodiment, the Hansen solubility parameter ($\delta_{s1}$) of the first solvent and the Hansen solubility parameter ($\delta_m$) of the fluorine-based polymer may satisfy the following Equation 1, Equation 1-1, Equation 1-2, or Equation 1-3:

$$[\text{Equation 1}] \quad \delta_m - \delta_{s1} < 10 \text{ MPa}^{0.5}$$

$$[\text{Equation 1-1}] \quad 2.0 \text{ MPa}^{0.5} \leq \delta_m - \delta_{s1} \leq 9 \text{ MPa}^{0.5}$$

$$[\text{Equation 1-2}] \quad 3.0 \text{ MPa}^{0.5} \leq \delta_m - \delta_{s1} \leq 6.0 \text{ MPa}^{0.5}$$

$$[\text{Equation 1-3}] \quad 7.0 \text{ MPa}^{0.5} \leq \delta_m - \delta_{s1} \leq 8.5 \text{ MPa}^{0.5}.$$

When Equation 1, Equation 1-1, Equation 1-2, or Equation 1-3 is satisfied, the fluorine-based polymer has excellent solubility, and phase separation from the second solvent occurs, thereby manufacturing a porous organic-inorganic composite electrolyte membrane having excellent surface properties and high ion conductivity.

According to an exemplary embodiment, the Hansen solubility parameter ($\delta_{s1}$) of the first solvent may be 15 to 25 MPa$^{0.5}$, 17 to 24 MPa$^{0.5}$, 17.5 to 23.5 MPa$^{0.5}$, 17.5 to 22.5 MPa$^{0.5}$, 17.5 to 19.0 MPa$^{0.5}$, or 21.0 to 22.0 MPa$^{0.5}$.

According to an exemplary embodiment, the first solvent may have a boiling point of 100°C or lower, 0 to 80°C, or 20 to 80°C. Otherwise, the boiling point of the first solvent may be lower than the boiling point of the second solvent, or may be 150°C or lower, 10 to 120°C, 50 to 115°C, or 90 to 110°C.

According to an exemplary embodiment, the vapor pressure at room temperature of the first solvent may be higher than the vapor pressure at room temperature of the second solvent, or may be 20 mmHg or higher or 25 to 150 mmHg.

According to an exemplary embodiment, the second solvent is not phase separated from the first solvent, but is phase separated from the fluorine-based polymer, and may be a nonpolar organic solvent. Otherwise, the dipole moment of the second solvent may be 0 to 2 D, 0 to 1 D, or 0 to 0.5 D.

According to an exemplary embodiment, the second solvent may be any one or a combination of two or more selected from the group consisting of a hydrocarbon-based organic solvent, or an aliphatic hydrocarbon-based organic solvent such as hexane, octane, and heptane, a cycloaliphatic hydrocarbon-based organic solvent such as cyclohexane, cyclohexene, ethylcyclohexane, methylcyclohexane, and methylchclohexene, an aromatic hydrocarbon-based organic solvent such as benzene, toluene, xylene, ethylbenzene, diethylbenzene, trimethylbenzene, and triethylbenzene, and the like.

According to an exemplary embodiment, the hydrocarbon-based organic solvent may be a $C_{3-30}$ hydrocarbon-based organic solvent or a $C_{5-12}$ hydrocarbon-based organic solvent. Otherwise, the second solvent may be any one or a combination of two or more selected from the group consisting of pentane, hexane, heptane, octane, nonane, decane, undecane, dodecane, and the like.

According to an exemplary embodiment, the Hansen solubility parameter ($\delta_{s2}$) of the second solvent and the Hansen solubility parameter ($\delta_m$) of the fluorine-based polymer may satisfy the following Equation 2, Equation 2-1, or Equation 2-2:

$$[\text{Equation 2}] \quad 7 \text{ MPa}^{0.5} \leq \delta_m - \delta_{s2}$$

$$[\text{Equation 2-1}] \quad 7 \text{ MPa}^{0.5} \leq \delta_m - \delta_{s2} \leq 20 \text{ MPa}^{0.5}$$

$$[\text{Equation 2-2}] \quad 8 \text{ MPa}^{0.5} \leq \delta_m - \delta_{s2} \leq 15 \text{ MPa}^{0.5}.$$

When the second solvent satisfies the dipole moment conditions and Equation 2, 2-1, or 2-2, and the second solvent satisfying the conditions is used, the side reaction between the oxide-based inorganic electrolyte and the solvent is effectively suppressed to improve storage stability of the slurry, the oxide-based inorganic electrolyte having a cubic phase crystal structure may be stably formed, thereby manufacturing a porous organic-inorganic composite electrolyte membrane having excellent surface properties and ion conductivity.

According to an exemplary embodiment, the Hansen solubility parameter ($\delta_{s2}$) of the second solvent may be 17 MPa$^{0.5}$ or less, 1 to 17 MPa$^{0.5}$, 7 to 17 MPa$^{0.5}$, or 10 to 17 MPa$^{0.5}$.

According to an exemplary embodiment, the boiling point of the second solvent may be higher than the boiling point of the first solvent, or may be 100°C or higher, 100 to 300°C, or 110 to 230°C.

According to an exemplary embodiment, the vapor pressure at room temperature of the second solvent may be lower than the vapor pressure at room temperature of the first solvent, or may be 15 mmHg or lower or 0.5 to 12 mmHg.

According to an exemplary embodiment, the first solvent to the second solvent may satisfy a weight ratio of 0.1 to 100:1, 1 to 80:1, 5 to 50:1, or 10 to 30:1.

According to an exemplary embodiment, since the first solvent and the second solvent satisfy the physical properties described above in specific ranges, the object to be implemented in the present disclosure may be achieved.

The method for manufacturing a porous organic-inorganic composite electrolyte membrane according to an exemplary embodiment may use a commonly known or used method for manufacturing a porous membrane without great limitation, as long as the physical properties to be desired in the present disclosure are not impaired, and specifically, may use dry phase inversion.

According to an exemplary embodiment, (S2) may include: (a) applying the electrolyte slurry; (b) drying the first solvent of the electrolyte slurry at a first drying temperature (hereinafter, referred to as first drying); and (c) drying the second solvent of the electrolyte slurry at a second drying temperature (hereinafter, referred to as second drying).

According to an exemplary embodiment, the application may use a commonly used or known coating or application method without great limitation, and as an example, may use a method such as spin coating, dip coating, inkjet printing, spray coating, screen printing, drop casting, or a doctor blade. In addition, an application amount may be easily adjusted depending on the thickness of the electrolyte membrane to be manufactured.

According to an exemplary embodiment, the second drying temperature may be higher than the first drying temperature. The first drying is a step of drying the first solvent, and the first drying temperature may be 0 to 80°C or 10 to 50°C. The second drying is a step of drying the second solvent, and the second drying temperature may be 80 to 300°C or 90 to 150°C.

The present disclosure may provide a porous organic-inorganic composite electrolyte membrane manufactured by the manufacturing method described above, and the physical properties described above may be satisfied.

The present disclosure may provide a method for manufacturing an organic-inorganic composite electrolyte including: manufacturing the porous organic-inorganic composite electrolyte membrane; and impregnating the porous organic-inorganic composite electrolyte membrane with an organic electrolyte, according to the method for manufacturing a porous organic-inorganic composite electrolyte membrane described above. A method for impregnating the organic electrolyte may use a method used in the same technical field without limitation and may be easily selected and performed according to a known method, and since detailed performance conditions are widely known, it will not be described in detail in the present disclosure.

According to an exemplary embodiment, an organic electrolyte including a lithium salt and a solvent is injected into the porous organic-inorganic composite electrolyte membrane described above; or an organic electrolyte including a curable monomer and an initiator is injected and cured to manufacture an organic-inorganic composite electrolyte, but is not limited thereto. The organic electrolyte may be injected or impregnated according to a common or known method used in the art, and when the organic-inorganic composite electrolyte according to an exemplary embodiment is used, the side reaction of the oxide-based inorganic electrolyte is minimized and an effect of significant ion conductivity improvement may be implemented, as compared with the case of using a conventional organic electrolyte alone.

Hereinafter, the present disclosure will be described in more detail, based on the examples and the comparative examples. However, the following examples and the comparative examples are only examples for describing the present disclosure in more detail, and do not limit the present disclosure in any way.

First, the measurement of physical properties and the evaluation method of the separator will be described.

[Method for evaluating physical properties]

1. X-ray photoelectron spectroscopy (XPS)

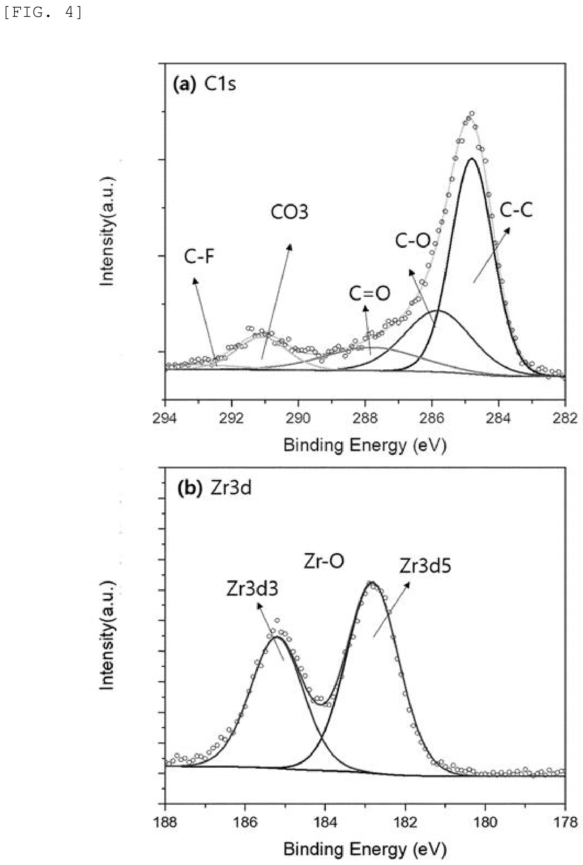

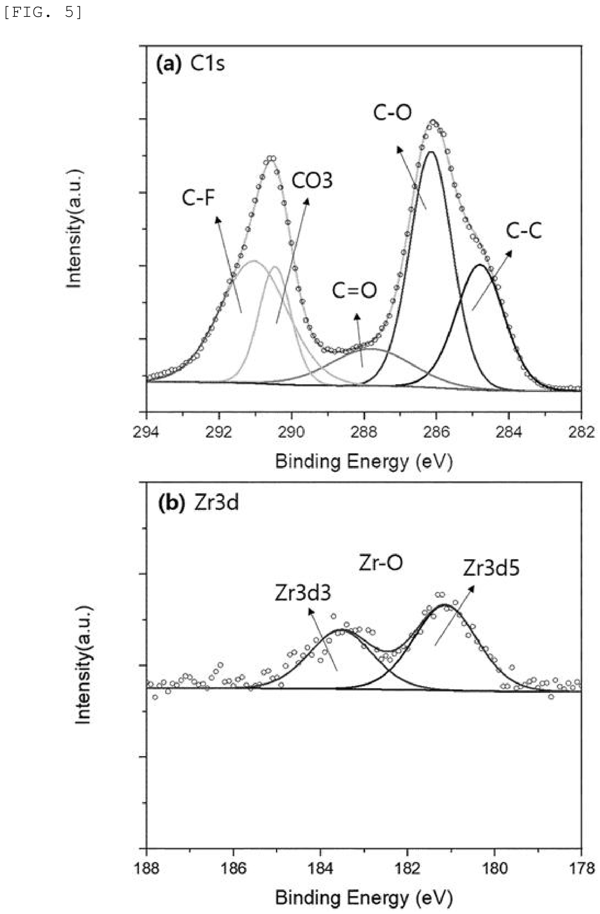

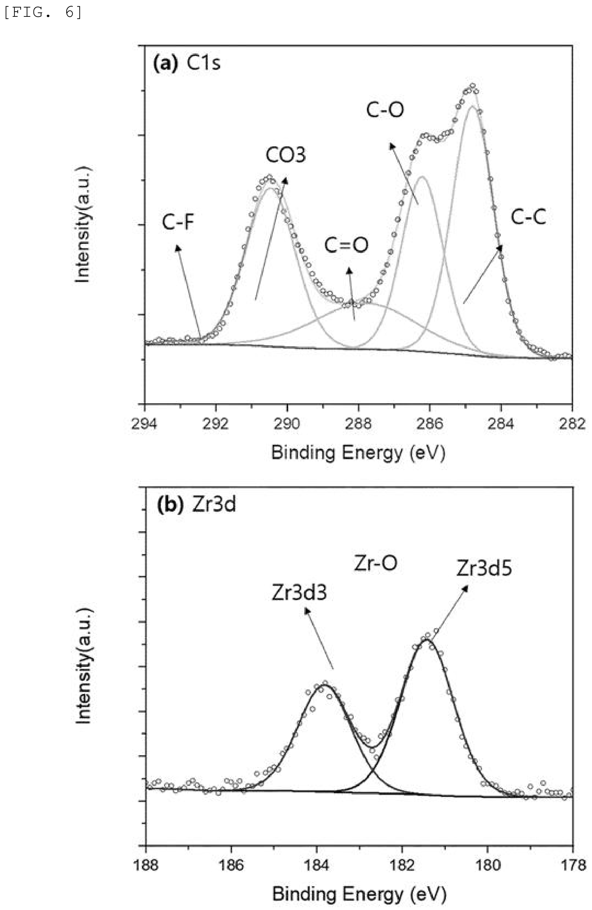

The surface of an electrolyte membrane manufactured using an X-ray photoelectron spectrometer (XPS) (Thermo Scientific, ESCALAB 250Xi) analytical instrument was analyzed. The measurement conditions were as follows: For surface analysis, the surface was etched with an Ar ion and then measurement was performed, and the measured XPS spectrum is shown in FIGS. 4 to 6.

[XPS measurement conditions]

- X-ray type: Source - Al Ka(alpha) 1486.68eV, Beam size 900 $\mu$m
- Analyzer: CAE Mode
- Number of scans: 2 (survey scan), 20 (Narrow Scan)
- Pass energy: 150 eV (survey Scan), 20 eV (Narrow Scan)

- Ion gun: Ar ion

In addition, an area ($S_{Zr}$) of a peak corresponding to $Zr3d_{5/2}$ in a Zr3d spectrum and an area ($S_{CO3}$) of a peak corresponding to $CO_3$ in a C1s spectrum were calculated as areas obtained by analyzing each element peak based on XPS analysis, and specifically, in the C1s spectrum, peaks corresponding to C-C (284.8 eV), C-O, C=O, $CO_3$, and C-F were analyzed, the area corresponding to each peak was calculated, and among them, the area of C=O was calculated. A method for calculating the area used a commonly used analysis technique.

2. X-ray diffraction (XRD) analysis

An electrolyte membrane was analyzed using an X-ray diffractometer (XRD) (PANalytica 1). The measurement conditions were as follows:

[XRD measurement conditions]

- Anode material: Cu
- K-Alpha1 wavelength: 1.540598 Å
- Generator voltage: 45 kV
- Tube current: 40 mA
- Scan Range: 10-80°
- Incidence Beam: BBHD
- Divergence slit: 1/4°
- Antiscatter slit: 1°

The analysis results using the Rietveld method of the measured XRD spectrum are shown in FIG. 7, and thus, peaks corresponding to the crystal planes of a (112) plane, a (024) plane, and a (224) plane were analyzed, and also, the lattice parameter and the lattice volume (V) of the unit lattice of the oxide-based inorganic electrolyte are shown in the following Table 2.

3. Porosity (%)

Porosity was measured by a method of calculating a pore area in a cross-sectional SEM image of an electrolyte membrane using an automatic bright/dark contrast function of an Image J program.

4. Electrolytic solution impregnation rate (uptake rate, %)

The uptake rate of the manufactured electrolyte membrane was measured by the following Calculation Formula 1 and is shown in the following Table 2:

[Calculation Formula 1]

Electrolytic solution impregnation rate (%) =

$$\frac{W - W_0}{W_0} \times 100$$

wherein $W_0$ is a weight of a pure electrolyte membrane, and W is a weight of an electrolyte membrane impregnated with an organic electrolytic solution (1.0M $LiPF_6$-EC/EMC (3/7, v/v) + FEC 5 wt.%).

5. Ion conductivity [S/cm]

The manufactured porous organic-inorganic composite electrolyte membrane was interposed between stainless steels (thickness: 1 mm), 1M $LiPF_6$ was dissolved in a mixed solvent including EC/EMC at a volume ratio of 3:7, and an organic electrolyte including 5 wt% of FEX was injected to manufacture a coin cell-type battery (coin cell) including the organic-inorganic composite electrolyte.

The ion conductivity of the manufactured battery was measured by electrochemical impedance spectroscopy (EIS) (measurement conditions: frequency: 1.0Mhz - 0.1Hz, amplitude potential: 10 mV) and the following Calculation Formula 2, and is shown in the following Table 2:

$$[\text{Calculation Formula 2}]$$

$$\sigma[S/cm] = \frac{L\,[cm]}{R[\Omega]\,A[cm^2]}$$

wherein $\sigma$ is ion conductivity, R is resistance (Z), L is thickness, and A is area.

6. Life characteristics and high-rate characteristics

A coin cell-type battery manufactured to include a graphite negative electrode/ an organic-inorganic composite electrolyte/ a $LiNi_{0.8}Mn_{0.1}Co_{0.1}O_2$ positive electrode was charged/discharged 5 times at a voltage of 2.5 V to 4.2 V under various charge and discharge conditions at current densities of 0.1 C, 03.C, 0.3 C, 0.5 C, 1.0 C, 2.0 C, and 5.0 C, respectively, the changes were observed, and a discharge capacity [mAh/g] under 2 C discharge conditions is shown in the following Table 2. Subsequently, 200 cycles of charge/discharge were performed under 0.5 C charge conditions/ 1.0 C discharge conditions to evaluate the life characteristics of a battery. The life characteristics were obtained by measuring a capacity retention rate after charge/discharge represented as a ratio (%) of a discharge capacity after repeating 200 cycles of charge/discharge to an initial discharge capacity and are shown in the following Table 3, and the result graph is shown in FIG. 9.

[Example 1]

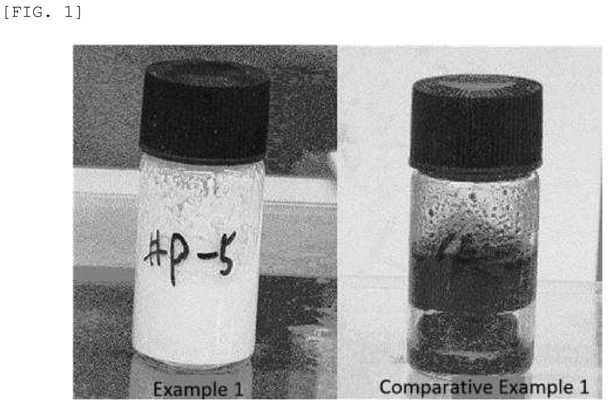

P(VdF-co-HFP) (HFP 12 wt%, Hansen solubility parameter ($\delta_m$) : 26.4 MPa$^{0.5}$) which is a fluorine-based polymer was dissolved in a first solvent (THF) at a concentration of 10 wt%, a garnet-type LLZO and a second solvent (octane) were added thereto, and stirring/ball milling was performed to prepare an electrolyte slurry. At this time, the Hansen solubility parameter ($\delta_{s1}$) of the first solvent and the Hansen solubility parameter ($\delta_{s2}$) of the second solvent are shown in the following Table 1. In addition, they were added so that the first solvent and the second solvent satisfied a weight ratio of 17:1, and the fluorine-based polymer and the garnet-type LLZO satisfied a weight ratio of 3:7. In order to evaluate the storage stability of the prepared slurry, a change after allowing the slurry to stand at room temperature for 1 hour was observed and is shown in FIG. 1.

The prepared slurry was cast on an electrode or a release film with a doctor blade, and first dried at room temperature to manufacture a porous fluorine-based polymer matrix film. Subsequently, the film was second dried at 100°C under vacuum to finally obtain a porous organic-inorganic composite electrolyte membrane according to Example 1.

[Example 2]

A porous organic-inorganic composite electrolyte membrane according to Example 2 was manufactured in the same manner as in Example 1, except that the fluorine-based polymer and the garnet-type LLZO were added so as to satisfy the weight ratio of 2:8.

[Example 3]

A porous organic-inorganic composite electrolyte membrane according to Example 3 was manufactured in the same manner as in Example 2, except that ethyl methyl carbonate (EMC) was used as the first solvent.

[Comparative Example 1]

The process was performed in the same manner as in Example 1, except that DMF was used as the first solvent.

[Comparative Example 2]

The process was performed in the same manner as in Example 1, except that acetone was used as the first solvent.

[Comparative Example 3]

The process was performed in the same manner as in Example 1, except that zirconium oxide (ZrO$_2$) was used instead of garnet-type LLZO.

[Comparative Example 4]

The process was performed in the same manner as in Example 2, except that zirconium oxide (ZrO$_2$) was used instead of the garnet-type LLZO.

[Table 1]

|  | First solvent | | Second solvent | |
| --- | --- | --- | --- | --- |
|  | Type | $\delta_{s1}$[MPa$^{0.5}$] | Type | $\delta_{s2}$[MPa$^{0.5}$] |
| Example 1 | THF | 21.9 | Octane | 15.5 |
| Example 2 | THF | 21.9 | Octane | 15.5 |
| Example 3 | EMC | 18.0 | Octane | 15.5 |
| Comparative Example 1 | DMF | 24.9 | Octane | 15.5 |
| Comparative Example 2 | Acetone | 20.0 | Octane | 15.5 |
| Comparative Example 3 | DMF | 24.9 | Octane | 15.5 |
| Comparative Example 4 | Acetone | 20.0 | Octane | 15.5 |

Physical properties of XPS, XRD, porosity, electrolytic solution impregnation amount, surface properties, and ion conductivity of the obtained porous organic-inorganic composite electrolyte membranes according to Examples 1 to 3 and Comparative Examples 1 to 4 were analyzed/measured and are shown in the following Table 2. However, in Comparative Examples 1 and 2, the membrane forming solution was gelled, so that the membrane was not manufactured, and thus, porosity, electrolytic solution impregnation amount, and ion conductivity were not able to be measured.

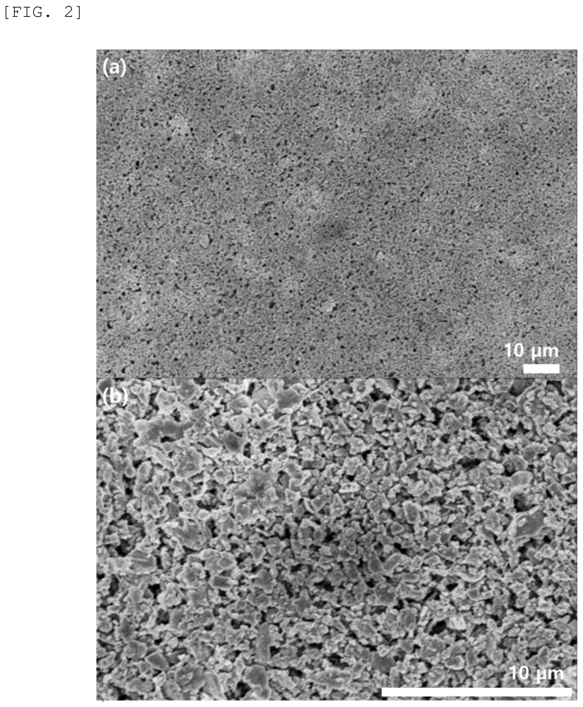

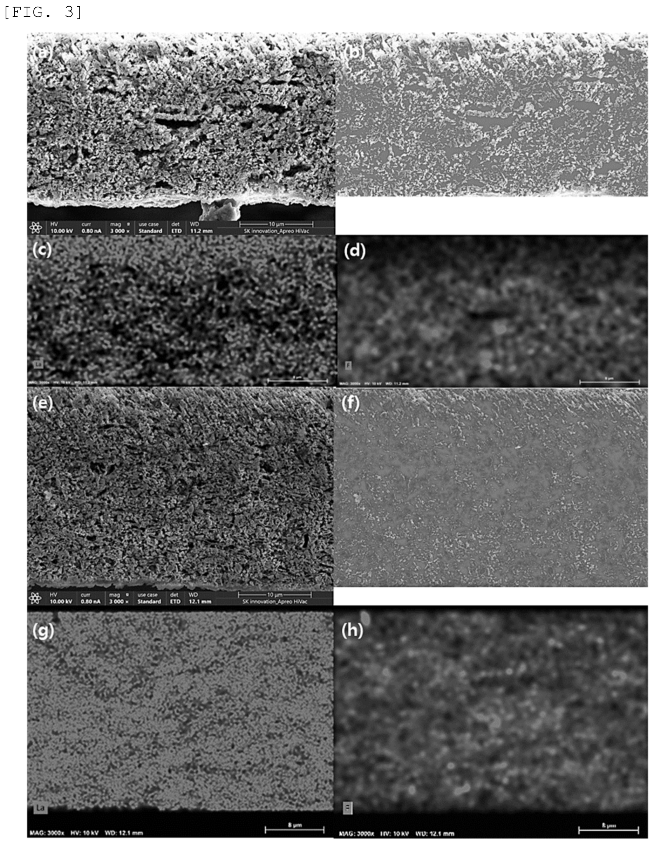

In addition, the scanning electron microscope (SEM) images of the surface and cross section of the porous organic-inorganic composite electrolyte membranes of Examples 1 and 2 are shown in FIG. 2, and their EDX mapping images are shown in FIG. 3. It was confirmed from the EDX mapping images that the oxide-based inorganic electrolyte and the fluorine-based polymer electrolyte were evenly distributed in the electrolyte membrane.

[Table 2]

|  | $S_{CO3}/S_{Zr}$ | Lattice parameter a=b=c [Å] | Volume of lattice [Å$^3$] | Porosity [%] | Uptake rate [%] | Ion conductivity [S/cm] |
| --- | --- | --- | --- | --- | --- | --- |
| Example 1 | 1.07 | 12.9884 | 2191.15 | 40.4 | 35.1 | $4.8 \times 10^{-4}$ |
| Example 2 | 0.17 | 12.9837 | 2188.78 | 44.3 | 37.5 | $8.7 \times 10^{-4}$ |
| Example 3 | 1.5 | 13.03573 | 2215.165 | 42.7 | 36.8 | $8.3 \times 10^{-4}$ |
| Comparative Example 1 | 5.7 | 13.05812 | 2226.598 | - | - | - |
| Comparative Example 2 | 26.4 | 13.06210 | 2228.636 | - | - | - |
| Comparative Example 3 | - | - | - | 41.5 | 36.3 | $3.4 \times 10^{-4}$ |
| Comparative Example 4 | - | - | - | 45.8 | 38.7 | $7.5 \times 10^{-4}$ |

As shown in Table 2, in the X-ray photoelectron spectroscopy (XPS) spectrum of the surface of the porous organic-inorganic composite electrolyte membranes according to Examples 1 to 3, $S_{CO3}/S_{Zr}$ was 5 or less or 2 or less, but in Comparative Examples 1 and 2, $S_{CO3}/S_{Zr}$ was all more than 5. Thus, it was confirmed that the side reaction of the oxide-based inorganic electrolyte on the surface of the porous organic-inorganic composite electrolyte membrane according to an exemplary embodiment was effectively suppressed.

Specifically, since in Examples 1 to 3, the surface of the oxide-based inorganic electrolyte was stably maintained, lithium ion transfer by oxide particles and oxide surface was activated to show high ion conductivity. In particular, in Example 2, as the content of the oxide-based inorganic electrolyte was increased, the ion conductivity was confirmed to be higher than that of Example 1. In addition, it was confirmed from FIG. 8 that the porous organic-inorganic composite electrolyte membrane according to Example 1 had excellent surface properties and had a flexible appearance.

Thus, it was confirmed that the porous organic-inorganic composite electrolyte membrane according to an exemplary embodiment showed excellent porosity, impregnation rate, and ion conductivity values as compared with the comparative examples.

In addition, the life characteristics and the high-rate characteristics of the composite electrolytes manufactured according to Examples 1 to 3 and Comparative Examples 3 and 4 were evaluated according to the evaluation method described above and are shown in the following Table 3 and FIG. 9.

[Table 3]

|  | Ion conductivity [S/cm] | Discharge capacity (@2C) [mAh/g] | Capacity retention rate [%] |
|---|---|---|---|
| Example 1 | $4.8\times10^{-4}$ | 75 | 92 |
| Example 2 | $8.7\times10^{-4}$ | 119 | 92 |
| Example 3 | $8.3\times10^{-4}$ | 117 | 95 |
| Comparative Example 3 | $3.4\times10^{-4}$ | 16 | 42 |
| Comparative Example 4 | $7.5\times10^{-4}$ | 17 | 43 |

As shown in Table 3, the battery including the organic-inorganic composite electrolyte according to an exemplary embodiment showed a very high discharge capacity even at a high-rate as compared with the comparative examples, and the capacity retention rate measured after 200 cycles was twice or more and showed an excellent numerical value.

Specifically, since Examples 1 to 3, in particular, Examples 2 and 3, maintained the surface of the oxide-based inorganic electrolyte stable, lithium ion transfer through oxide particles and an oxide surface was activated to show better high-rate characteristics and stable charge/discharge performance than Comparative Examples 3 and 4. In addition, it was confirmed that since the oxide-based inorganic electrolyte content of Example 2 was increased as compared with that of Example 1, the high-rate characteristics were improved, and the capacity retention rate of Example 3 was improved as compared with that of Example 2. However, since in Comparative Examples 3 and 4, an oxide including no lithium ion was used, further transfer of lithium ions was not allowed, which was found to be unfavorable for securing high-rate performance.

It was confirmed therefrom that when a lithium secondary battery was manufactured by including the organic-inorganic composite electrolyte according to an exemplary embodiment, significantly improved life characteristics and high-rate characteristics were able to be implemented.

Therefore, the porous organic-inorganic composite electrolyte membrane according to an exemplary embodiment showed excellent surface properties and had a minimized side reaction of the oxide-based inorganic electrolyte to implement an effect of significant ion conductivity improvement, by manufacturing it using the electrolyte slurry including the first solvent, the second solvent, the fluorine-based polymer, and the oxide-based inorganic electrolyte satisfying the conditions described above. In addition, it was confirmed that when the lithium secondary battery was manufactured using the organic-inorganic composite electrolyte including the porous organic-inorganic composite electrolyte membrane, the battery was able to have life characteristics and high-rate characteristics which were superior to the conventional battery.

Hereinabove, although the present disclosure has been described by the specific matters and limited exemplary embodiments in the present disclosure, they have been provided only for assisting the entire understanding of the present disclosure, and the present disclosure is not limited to the exemplary embodiments, and various modifications and changes may be made by those skilled in the art to which the present disclosure pertains from the description.

Therefore, the present disclosure is not limited to the above-described exemplary embodiments, and the following claims as well as all modifications equal or equivalent to the claims are intended to fall within the scope of the disclosure.

**Claims**

1. A porous organic-inorganic composite electrolyte membrane comprising: an oxide-based inorganic electrolyte and a fluorine-based polymer matrix,

   wherein the oxide-based inorganic electrolyte is included in the fluorine-based polymer, and as a result of X-ray photoelectron spectroscopy (XPS) of the surface, a ratio ($S_{CO3}/S_{Zr}$) of an area ($S_{CO3}$) of a peak corresponding to $CO_3$ in a C1s spectrum to an area ($S_{Zr}$) of a peak corresponding to $Zr3d_{5/2}$ in a Zr3d spectrum is more than 0 and 5.0 or less.

2. The porous organic-inorganic composite electrolyte membrane of claim 1, wherein as a result of X-ray diffraction (XRD) analysis, the oxide-based inorganic electrolyte shows a first peak in a $2\theta$ range of $16.5\pm1.0$.

3. The porous organic-inorganic composite electrolyte membrane of claim 1, wherein a lattice parameter of a unit lattice of the oxide-based inorganic electrolyte calculated by the Rietveld refinement method based on an X-ray diffraction (XRD) spectrum is 12.90 Å < a=b=c < 13.05 Å.

4. The porous organic-inorganic composite electrolyte membrane of claim 1, wherein the oxide-based inorganic electrolyte has a volume (V) of the unit lattice of 2147.0 to 2216.5 Å$^3$.

5. The porous organic-inorganic composite electrolyte membrane of claim 1, wherein the oxide-based inorganic electrolyte is any one or a combination of two or more selected from the group consisting of garnet-type oxides (LLZO), NASICON-type oxides, and perovskite-type oxides.

6. The porous organic-inorganic composite electrolyte membrane of claim 1, wherein the fluorine-based polymer has a Hansen solubility parameter ($\delta$) of 20 to 30 MPa$^{0.5}$.

7. The porous organic-inorganic composite electrolyte membrane of claim 1, wherein the electrolyte membrane has a porosity of 30% or more.

8. An organic-inorganic composite electrolyte comprising the porous organic-inorganic composite electrolyte membrane of any one of claims 1 to 7 and an organic electrolyte.

9. The organic-inorganic composite electrolyte of claim 8, wherein the electrolyte has an ion conductivity of $1\times10^{-4}$ S/cm or more.

10. A lithium secondary battery comprising the organic-inorganic composite electrolyte of claim 8.

11. A method for manufacturing a porous organic-inorganic composite electrolyte membrane, the method comprising:

    (S1) preparing an organic-inorganic electrolyte slurry including a fluorine-based polymer, an oxide-based inorganic electrolyte, a first solvent, and a second solvent; and
    (S2) drying the electrolyte slurry to manufacture a porous organic-inorganic composite electrolyte membrane, wherein the first solvent and the second solvent do not cause phase separation from each other, and the second solvent and the fluorine-based polymer cause phase separation from each other.

12. The method for manufacturing a porous organic-inorganic composite electrolyte membrane of claim 11, wherein the first solvent is a polar organic solvent, and the second solvent is a nonpolar organic solvent.

13. The method for manufacturing a porous organic-inorganic composite electrolyte membrane of claim 11, wherein a Hansen solubility parameter ($\delta_{s1}$) of the first solvent and a Hansen solubility parameter ($\delta_m$) of the fluorine-based polymer satisfy the following Equation 1:

$$[\text{Equation 1}] \quad \delta_m - \delta_{s1} < 10 \text{ MPa}^{0.5}.$$

14. The method for manufacturing a porous organic-inorganic composite electrolyte membrane of claim 11, wherein the Hansen solubility parameter ($\delta_{s1}$) of the first solvent is 17 to 24 MPa$^{0.5}$.

15. The method for manufacturing a porous organic-inorganic composite electrolyte membrane of claim 11, wherein the Hansen solubility parameter ($\delta_{s2}$) of the second solvent and the Hansen solubility parameter ($\delta_m$) of the fluorine-based polymer satisfy the following Equation 2:

$$[\text{Equation 2}] \quad 7 \text{ MPa}^{0.5} \leq \delta_m - \delta_{s2}.$$

16. The method for manufacturing a porous organic-inorganic composite electrolyte membrane of claim 11, wherein the Hansen solubility parameter ($\delta_{s2}$) of the second solvent is 17 MPa$^{0.5}$ or less.

17. The method for manufacturing a porous organic-inorganic composite electrolyte membrane of claim 11, wherein the first solvent and the second solvent satisfy a weight ratio of 5 to 50:1.

18. The method for manufacturing a porous organic-inorganic composite electrolyte membrane of claim 11, wherein (S2) includes: (a) applying the electrolyte slurry; (b) drying the first solvent of the electrolyte slurry at a first drying temperature; and (b) drying the second solvent of the electrolyte slurry at a second drying temperature.

19. The method for manufacturing a porous organic-inorganic composite electrolyte membrane of claim 18, wherein the second drying temperature is higher than the first drying temperature.

20. A method for manufacturing an organic-inorganic composite electrolyte, the method comprising:

    manufacturing a porous organic-inorganic composite electrolyte membrane by the method of any one of claims 11 to 19; and
    impregnating the porous organic-inorganic composite electrolyte membrane with an organic electrolyte.

[FIG. 1]

Example 1      Comparative Example 1

[FIG. 2]

[FIG. 3]

[FIG. 4]

[FIG. 5]

[FIG. 6]

(a) C1s

(b) Zr3d

[FIG. 7]

[FIG. 8]

[FIG. 9]

## INTERNATIONAL SEARCH REPORT

| International application No. |
|---|
| **PCT/KR2024/007117** |

| | |
|---|---|
| **A.** | **CLASSIFICATION OF SUBJECT MATTER** |
| | **H01M 10/056**(2010.01)i; **H01M 10/052**(2010.01)i |

According to International Patent Classification (IPC) or to both national classification and IPC

| | |
|---|---|
| **B.** | **FIELDS SEARCHED** |

Minimum documentation searched (classification system followed by classification symbols)

H01M 10/056(2010.01); C08J 3/09(2006.01); C08J 3/215(2006.01); H01M 10/052(2010.01); H01M 10/0525(2010.01); H01M 10/0562(2010.01); H01M 10/6565(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬이차전지(lithium secondary battery), 전해질막(electrolyte membrane), 산화물계 무기전해질(oxide-based inorganic electrolyte), 불소계 고분자(fluorine-based polymer), 용매 (solvent), 상분해(phase separation)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y | KR 10-2016-0068464 A (SAMSUNG SDI CO., LTD. et al.) 15 June 2016 (2016-06-15) <br> See abstract; claims 4-8, 10, 15 and 17; paragraphs [0011], [0051], [0054] and [0060]; and table 1. | 1-20 |
| Y | KR 10-2021-0016538 A (TEEBS R&D, LLC) 16 February 2021 (2021-02-16) <br> See claims 1, 3-5, 7, 10 and 14; and paragraphs [0010], [0015], [0020], [0023], [0026], [0029], [0030], [0033], [0037], [0050] and [0055]. | 1-20 |
| A | CN 115312836 A (SICHUAN NEW ENERGY AUTOMOBILE INNOVATION CENTER CO., LTD.) 08 November 2022 (2022-11-08) <br> See claims 1-2, 4-7 and 9; and paragraph [0090]. | 1-20 |
| A | CN 112687945 A (SOUTHERN UNIVERSITY OF SCIENCE AND TECHNOLOGY) 20 April 2021 (2021-04-20) <br> See claims 1-4 and 7-9. | 1-20 |

| | |
|---|---|
| ✓ Further documents are listed in the continuation of Box C. | ✓ See patent family annex. |

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 September 2024** | **02 September 2024** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2024/007117**

### C. DOCUMENTS CONSIDERED TO BE RELEVANT

| Category* | Citation of document, with indication, where appropriate, of the relevant passages | Relevant to claim No. |
|---|---|---|
| A | KR 10-2016-0079405 A (HYUNDAI MOTOR COMPANY) 06 July 2016 (2016-07-06)<br>See claims 1, 4, 6 and 11. | 1-20 |

Form PCT/ISA/210 (second sheet) (July 2022)

## INTERNATIONAL SEARCH REPORT
### Information on patent family members

International application No.

**PCT/KR2024/007117**

| Patent document cited in search report | | | Publication date (day/month/year) | Patent family member(s) | | | Publication date (day/month/year) |
|---|---|---|---|---|---|---|---|
| KR | 10-2016-0068464 | A | 15 June 2016 | KR | 10-2284480 | B1 | 02 August 2021 |
| | | | | US | 10637097 | B2 | 28 April 2020 |
| | | | | US | 2016-0164138 | A1 | 09 June 2016 |
| KR | 10-2021-0016538 | A | 16 February 2021 | CN | 112335072 | A | 05 February 2021 |
| | | | | CN | 112640153 | A | 09 April 2021 |
| | | | | JP | 2021-522665 | A | 30 August 2021 |
| | | | | JP | 2021-523253 | A | 02 September 2021 |
| | | | | JP | 7509425 | B2 | 02 July 2024 |
| | | | | KR | 10-2021-0016535 | A | 16 February 2021 |
| | | | | US | 11870058 | B2 | 09 January 2024 |
| | | | | US | 2019-0338083 | A1 | 07 November 2019 |
| | | | | US | 2019-0341604 | A1 | 07 November 2019 |
| | | | | US | 2024-0145671 | A1 | 02 May 2024 |
| | | | | WO | 2019-217356 | A1 | 14 November 2019 |
| | | | | WO | 2019-217381 | A1 | 14 November 2019 |
| | | | | WO | 2020-226686 | A1 | 12 November 2020 |
| CN | 115312836 | A | 08 November 2022 | None | | | |
| CN | 112687945 | A | 20 April 2021 | US | 2023-0198003 | A1 | 22 June 2023 |
| | | | | WO | 2022-134496 | A1 | 30 June 2022 |
| KR | 10-2016-0079405 | A | 06 July 2016 | KR | 10-1655627 | B1 | 07 September 2016 |

Form PCT/ISA/210 (patent family annex) (July 2022)